# FASCICULE DE BREVET EUROPEEN

(11) **EP 1 549 044 B1**
(45) Date de publication et mention de la délivrance du brevet: **21.10.2009**
(21) Numéro de dépôt: 04293093.3
(22) Date de dépôt: 22.12.2004
(51) Int. Cl.: H04N 1/52

(54) **Procédé et dispositif d'établissement de trames par décision de niveaux de saturation chromatique et diffusion d'erreur**
Verfahren und Vorrichtung zur Erzeugung von Rasterbildern durch Bestimmng des Chromatischesättigungspegels und Fehlerdiffusion
Method and apparatus for establishing screens by deciding the level of chromatic stauration and error diffusion

(30) Priorité: 23.12.2003 FR 0315249
(43) Date de publication de la demande: 29.06.2005
(73) Titulaire: SAGEM COMMUNICATIONS, 92848 Rueil Malmaison Cedex (FR)
(72) Inventeur: Monnerie, Nicolas, 21800 Quetigny (FR); Ostromoukhov, Victor, Outremont Quebec H2V3P3 (CA)
(74) Mandataire: Debay, Yves

(56) Documents cités:
- EP-A- 0 658 044
- US-A- 5 561 751
- US-B2- 6 637 851

## Description

### DOMAINE TECHNIQUE DE L'INVENTION

La présente invention s'applique au domaine de l'électronique et plus particulièrement à l'établissement de signaux représentatifs de trames de couleurs pour permettre leur impression par un dispositif d'impression ou leur affichage par des moyens d'affichage (écrans LCD, CRT ou plasma). La présente invention concerne un procédé d'établissement de trames d'images par diffusion d'erreur vectorielle, utilisant des seuils réglables de niveau de saturation des couleurs pour déterminer l'erreur vectorielle des pixels successifs.

### ARRIERE-PLAN TECHNOLOGIQUE DE L'INVENTION

Une trame est un ensemble de lignes successives constituées de points successifs (ou pixels) dont les valeurs représentatives de l'arrangement bidimensionnel et des compositions chromatiques et/ou de luminance définissent une image. Le tramage correspond donc à l'attribution d'une couleur et/ou d'une luminance à chaque pixel de la trame.

Il est connu dans l'art antérieur des procédés de tramage par diffusion d'erreur dans lesquels les niveaux de gris des pixels d'une image en cours de tramage sont comparés à un seuil pour attribuer aux pixels la couleur noire ou la couleur blanche. A chaque comparaison au seuil, l'erreur correspondant à l'approximation réalisée est gardée en mémoire pour influencer la comparaison au seuil des pixels suivants et voisins dans la trame. L'erreur réalisée sur chaque pixel est donc diffusée sur les pixels voisins.

Il est connu également des procédés de tramage par diffusion d'erreur dans lesquels les couleurs subissent un changement de l'espace des couleurs. Au lieu d'être représentées par des couches de couleurs primaires, les couleurs sont représentées par des vecteurs dans un espace à plusieurs dimensions. Chaque dimension de l'espace correspond à une composante chromatique (et/ou de luminance). Les caractéristiques chromatiques (et/ou de luminance) d'un pixel sont donc représentées par les coordonnées d'un vecteur dans les différentes dimensions de cet espace pluridimensionnel. Parmi les vecteurs de cet espace, certains correspondent exactement à des combinaisons de couleurs directement imprimables ou affichables par les dispositifs d'impression ou d'affichage et sont appelés vecteurs de référence. Dans chaque dimension de l'espace pluridimensionnel, correspondant chacune à une couleur (et/ou une luminance), les coordonnées d'un vecteur de référence ont des valeurs extrêmes qui définissent l'absence ou la présence de cette couleur (et/ou luminance) dans la combinaison de couleurs représentée par ce vecteur de référence. Pour chaque vecteur représentatif d'un pixel, son vecteur de référence le plus proche est recherché en calculant l'erreur vectorielle minimum (c'est-à-dire la différence minimale entre le vecteur représentatif du pixel et un des vecteurs de référence). La recherche du vecteur de référence le plus proche du vecteur représentatif du pixel en cours de traitement équivaut donc à la comparaison des coordonnées du vecteur représentatif du pixel à un seuil pour chaque dimension de l'espace pluridimensionnel et à l'attribution au vecteur d'une valeur discrète dans chaque dimension. L'erreur vectorielle introduite pour ce pixel est ensuite diffusée sur les pixels suivants et voisins dans la trame, pour influencer leur représentation vectorielle dans l'espace pluridimensionnel. L'erreur à diffuser correspond alors à la différence entre la valeur réelle des coordonnées du vecteur dans chaque dimension et la valeur discrète attribuée au vecteur dans cette dimension après comparaison au seuil.

Il est connu également de la demande EP 1 542 450, déposée par la demanderesse et faisant parti de l'état de la technique tel que défini par l'article 54(9) GBE, un procédé d'établissement de trame par diffusion d'erreur vectorielle dans lequel le calcul réalisé pour le tramage est accéléré du fait qu'il comporte une consultation d'une table de correspondance pour trouver le vecteur de référence le plus proche du vecteur représentatif du pixel en cours de tramage et du fait que la table de correspondance est de dimensions réduites par rapport au nombre de vecteurs couleur possibles, grâce au fait qu'un indice d'entrée dans cette table correspond à une pluralité de vecteurs possédant leur extrémité dans une même région de l'espace de représentation pluridimensionnel, selon une approximation de ces vecteurs au vecteur dont l'extrémité se trouve au centre de la région, cette approximation introduisant une erreur invisible par l'oeil humain. Cette solution accélère le traitement de l'image en limitant la quantité de données à calculer mais présente néanmoins l'inconvénient de ne pas traiter les niveaux de saturation chromatique indépendamment de la représentation des pixels dans un espace couleur pluridimensionnel.

En effet, les dispositifs modernes d'impression ou d'affichage permettent également de discriminer des signaux correspondant à des pixels de même couleur mais de saturation chromatique différente. Certains dispositifs d'impression permettent par exemple d'attribuer à un pixel la couleur cyan clair ou cyan foncé, grâce à l'existence de deux dilutions différentes ou de deux encres différentes dans le dispositif ou par une gestion de la taille des gouttes d'encre projetées.

Les procédés de tramage actuels et notamment celui décrit dans la demande EP 1 542 450 déposée par la demanderesse réalisent cette gestion des signaux de niveaux de saturation des couleurs lors du changement de l'espace des couleurs, c'est-à-dire qu'un pixel est représenté dans un espace pluridimensionnel dont certaines dimensions représentent une même couleur mais à des niveaux de saturation chromatique différents. Une dimension de l'espace représente une couleur claire et une autre dimension représente la même couleur, mais foncée. Les coordonnées du vecteur représentatif d'un pixel sont comparées à un seuil pour chaque dimension de l'espace pluridimensionnel et une des deux valeurs extrêmes (présence ou absence de la couleur) est attribuée au vecteur dans chaque dimension, ce qui aboutit à un vecteur de référence.

Une même couleur à deux niveaux de saturation chromatique différents étant considérée comme deux couleurs différentes, les procédés de tramage utilisant ce type d'espace pluridimensionnel risquent de superposer, par exemple, le cyan clair et le cyan foncé pour un même pixel, ce qui ne présente pas un grand intérêt visuel et constitue donc un gaspillage d'encre. De plus, cette gestion des niveaux de saturation des couleurs augmente le nombre de dimensions de l'espace pluridimensionnel de représentation des couleurs et rend les calculs d'établissement de la trame lents et compliqués.

### DESCRIPTION GENERALE DE L'INVENTION

La présente invention a pour but de pallier certains inconvénients de l'art antérieur en proposant un procédé d'établissement de signaux de trames par décision de niveau de saturation chromatique et diffusion d'erreur qui est rapide, du fait que les niveaux de saturation des couleurs sont gérés après le changement de l'espace des couleurs, ce qui réduit le nombre de composantes de couleur à traiter.

Ce but est atteint par le fait que l'invention concerne un procédé d'établissement de signaux de trame par décision de niveau de saturation chromatique et diffusion d'erreur, caractérisé en ce qu'il comporte :
- une étape de représentation des signaux représentatifs des pixels en vecteurs dans un espace pluridimensionnel dont au moins certaines dimensions correspondent à des composantes chromatiques et/ou de luminance et ne comportant pas plusieurs dimensions pour représenter une même couleur à des niveaux de saturation chromatique différents ;
- une étape de décision des niveaux de saturation chromatique correspondant aux coordonnées des vecteurs dans les différentes dimensions représentatives des différentes composantes chromatiques des pixels successifs, l'étape de représentation dans un espace pluridimensionnel étant distincte de l'étape de décision des niveaux de saturation chromatique.

Selon une autre particularité, l'étape de décision des niveaux de saturation chromatique correspondant aux coordonnées des vecteurs représentatifs des pixels successifs, dans chacune des dimensions concernant des composantes chromatiques pour lesquelles il existe un signal représentatif d'un niveau de saturation chromatique intermédiaire entre les signaux représentatifs des deux valeurs extrêmes de représentation de saturation chromatique dans les dispositifs auxquels la trame est destinée, consiste en les étapes suivantes :
- comparaison, dans cette dimension, des signaux représentatifs des coordonnées du vecteur représentatif du pixel en cours de traitement avec une valeur de seuil réglable de zones de degré de saturation chromatique définissant la limite, dans l'échelle complète des signaux représentatifs des niveaux de saturation chromatique possibles, entre deux zones de degré de saturation chromatique différentes (claire et foncée), puis choix de la zone dans laquelle les coordonnées du vecteur, dans cette dimension, sont comprises ;
- mise à l'échelle des signaux représentatifs des coordonnées du vecteur dans cette dimension et des signaux représentatifs de la zone de degré de saturation chromatique choisie à la taille de l'échelle complète des signaux représentatifs des niveaux de saturation chromatique possibles, comparaison des signaux représentatifs des coordonnées du vecteur, dans la zone de saturation chromatique choisie, avec une valeur de seuil réglable de saturation définissant la limite entre deux signaux représentatifs de niveaux de saturation chromatique différents, attribution aux coordonnées du vecteur dans cette dimension du signal représentatif du niveau de saturation chromatique dont ces coordonnées du vecteur sont les plus proches, puis combinaison du signal attribué pour cette dimension avec les signaux représentatifs des coordonnées du vecteur dans les autres dimensions et transmission de ces signaux combinés vers les dispositifs auxquels la trame est destinée ;
- retour du signal attribué pour cette dimension à l'échelle de départ et combinaison avec les signaux représentatifs des coordonnées du vecteur dans les autres dimensions, puis représentation des nouvelles coordonnées du vecteur dans l'espace pluridimensionnel, en vue de leur comparaison avec les coordonnées initiales.

Selon une autre particularité, l'étape de décision des niveaux de saturation chromatique correspondant aux coordonnées des vecteurs représentatifs des pixels successifs, dans chacune des dimensions concernant des composantes chromatiques pour lesquelles il n'existe que les signaux représentatifs des deux valeurs extrêmes de niveaux de saturation chromatique dans les dispositifs auxquels la trame est destinée, consiste en les étapes suivantes :
- comparaison des signaux représentatifs des coordonnées des vecteurs dans cette dimension avec une valeur de seuil réglable de saturation chromatique et attribution d'un des deux signaux représentatifs des valeurs extrêmes de niveaux de saturation chromatique dans cette dimension de l'espace ;
- combinaison du signal attribué pour cette dimension avec les signaux représentatifs des coordonnées des vecteurs dans les autres dimensions, puis transmission de ces signaux combinés vers les dispositifs auxquels la trame est destinée ;
- combinaison du signal attribué pour cette dimension avec les signaux attribués aux coordonnées des vecteurs dans les autres dimensions et remis à l'échelle pour la représentation des nouvelles coordonnées des vecteurs dans l'espace pluridimensionnel, en vue de leur comparaison avec les coordonnées initiales.

Selon une autre particularité, le procédé consiste en la répétition des étapes suivantes pour chaque pixel de la trame :
- représentation du pixel dans ledit espace pluridimensionnel sous la forme de signaux représentatifs d'un vecteur dont les coordonnées sont stockées en mémoire après ajustement, en fonction des signaux représentatifs des erreurs vectorielles mémorisées, éventuellement introduites sur les pixels précédents et voisins dans la trame ;
- décision signaux représentatifs des niveaux de saturation chromatique correspondant aux coordonnées de ce vecteur dans les différentes dimensions représentatives des différentes composantes chromatiques, pour définir de nouvelles coordonnées vectorielles ;
- calcul et mémorisation de l'erreur vectorielle introduite pour ce pixel par comparaison des nouvelles coordonnées du vecteur avec ses coordonnées initiales stockées en mémoire et diffusion de l'erreur vectorielle sur les pixels mémorisés, suivants et voisins dans la trame.

Selon une autre particularité, le calcul de l'erreur vectorielle consiste en le calcul d'un vecteur d'erreur dont les coordonnées, dans ledit espace pluridimensionnel, sont égales à la différence entre les coordonnées initiales, gardées en mémoire, du vecteur représentatif du pixel en cours de traitement et celles après décision des niveaux de saturation chromatique dans les différentes dimensions de l'espace pluridimensionnel.

Selon une autre particularité, la diffusion de l'erreur vectorielle mémorisée consiste en l'ajout, dans ledit espace pluridimensionnel, des signaux représentatifs des coordonnées d'un vecteur d'erreur, calculé et mémorisé pour un pixel, aux signaux représentatifs des coordonnées des vecteurs représentatifs des pixels mémorisés, suivants et voisins dans la trame.

Selon une autre particularité, les composantes chromatiques de représentation correspondant aux dimensions de l'espace pluridimensionnel de représentation sont directement utilisables par les dispositifs auxquels la trame est destinée et que la transmission des signaux représentatifs des coordonnées de vecteur vers ces dispositifs consiste simplement en l'envoi des signaux représentatifs des niveaux de saturation chromatique choisis, pour chaque dimension de l'espace de représentation.

Selon une autre particularité, lorsque les composantes chromatiques et/ou de luminance correspondant aux dimensions de l'espace pluridimensionnel de représentation ne sont pas directement utilisables par les dispositifs auxquels la trame est destinée, la transmission des signaux représentatifs des coordonnées de vecteur vers ces dispositifs comporte une étape préalable de conversion des signaux représentatifs des niveaux de saturation chromatique choisis, pour chaque dimension des coordonnées des vecteurs représentatifs des pixels, en signaux représentatifs de niveaux de saturation des composantes chromatiques directement utilisables par les dispositifs auxquels la trame est destinée.

Selon une autre particularité, l'étape de décision des niveaux de saturation chromatique correspondant aux coordonnées des vecteurs représentatifs des pixels successifs, dans chacune des dimensions concernant des composantes chromatiques pour lesquelles il existe n signaux représentatifs de niveaux de saturation chromatique intermédiaires entre les signaux représentatifs des deux valeurs extrêmes de niveaux de saturation chromatique dans les dispositifs auxquels la trame est destinée, consiste en les étapes suivantes :
- comparaison, dans cette dimension, des signaux représentatifs des coordonnées du vecteur représentatif du pixel en cours de traitement avec n valeurs de seuils réglables de zones de degré de saturation chromatique définissant les limites, dans l'échelle complète des signaux représentatifs des niveaux de saturation chromatique possibles, entre n+1 zones de degré de saturation chromatique différentes (claire et foncée), puis choix de la zone dans laquelle les coordonnées du vecteur, dans cette dimension, sont comprises ;
- mise à l'échelle des signaux représentatifs des coordonnées du vecteur dans cette dimension et des signaux représentatifs de la zone de degré de saturation chromatique choisie à la taille de l'échelle complète des signaux représentatifs des niveaux de saturation chromatique possibles, comparaison des signaux représentatifs des coordonnées du vecteur, dans la zone de saturation chromatique choisie, avec une valeur de seuil réglable de saturation définissant la limite entre deux signaux représentatifs de niveaux de saturation chromatique, attribution aux coordonnées du vecteur dans cette dimension du signal représentatif du niveau de saturation chromatique dont ces coordonnées du vecteur sont les plus proches, puis combinaison du signal attribué pour cette dimension avec les signaux représentatifs des coordonnées du vecteur dans les autres dimensions et transmission de ces signaux combinés vers les dispositifs auxquels la trame est destinée ;
- retour du signal attribué pour cette dimension à l'échelle de départ et combinaison avec les signaux représentatifs des coordonnées du vecteur dans les autres dimensions, puis représentation des nouvelles coordonnées du vecteur dans l'espace pluridimensionnel, en vue de leur comparaison avec les coordonnées initiales.

Un second but de l'invention est de proposer un dispositif permettant l'établissement de trames d'images rapidement grâce à un traitement des niveaux de saturation chromatique à attribuer aux pixels d'une image.

Ce but est atteint par un dispositif d'établissement de trame d'image, caractérisé en ce qu'il comprend des moyens de mémorisation des données représentatives de chaque pixel d'une image à traiter, sous forme de vecteurs d'un espace pluridimensionnel, des moyens de traitement de chaque vecteur représentatif d'un pixel d'une image pour décider des niveaux de saturation chromatique à attribuer aux coordonnées de ce vecteur pour chaque dimension représentative des différentes composantes chromatiques ayant des niveaux de saturation chromatique de représentation autres que les niveaux extrêmes d'une composante chromatique, des moyens de calcul des erreurs vectorielles introduites par le traitement de décision des niveaux de saturation chromatique, des moyens de mémorisation des erreurs et des moyens de diffusion des erreurs vectorielles sur les pixels à traiter, suivants et voisins dans la mémorisation matricielle de l'image.

Selon une autre particularité, le dispositif d'établissement de trame d'image comprend des moyens de transmission des signaux représentatifs des niveaux de saturation attribués à chaque pixel de la trame vers les dispositifs auxquels la trame est destinée, sous forme de signaux directement utilisables par ces dispositifs.

### BREVE DESCRIPTION DES DESSINS

D'autres particularités et avantages de la présente invention apparaîtront plus clairement à la lecture de la description ci-après, faite en référence aux dessins annexés, dans lesquels :
- la figure 1 représente un schéma de l'algorithme itéré pour chaque pixel d'une image lors de la mise en oeuvre du procédé selon l'invention de tramage par décision des niveaux de saturation chromatique et diffusion d'erreur vectorielle.
- la figure 2 représente un schéma de l'algorithme de décision des niveaux de saturation chromatique dans les dimensions de l'espace pluridimensionnel pour lesquelles il existe un niveau de saturation chromatique intermédiaire entre les deux valeurs extrêmes.

### DESCRIPTION DES MODES DE REALISATION PREFERES DE L'INVENTION

La présente invention de procédé d'établissement de trames (1) de valeurs de signaux représentatifs d'une image et mémorisés par un appareil, par décision des niveaux de saturation chromatique et diffusion d'erreur (52) consiste à décomposer les valeurs des signaux représentatifs des couleurs des pixels successifs de l'image en composantes chromatiques et à décider de la valeur du signal représentatif du niveau de saturation chromatique à attribuer à chaque composante, en fonction des valeurs de seuils de saturation chromatique, réglables pour chaque composante chromatique. Cette décomposition en composantes chromatiques équivaut d'une manière plus générale à une représentation des pixels successifs d'une image dans un espace pluridimensionnel dont au moins certaines dimensions correspondent à des caractéristiques chromatiques (et/ou de luminance). Pour certaines composantes chromatiques, les dispositifs auxquels la trame de valeurs de signaux est destinée possèdent parfois plusieurs niveaux de saturation chromatique possibles. Par exemple, certaines imprimantes peuvent imprimer un point de couleur cyan clair ou cyan foncé. Il faut donc envoyer un signal de niveau de saturation chromatique adapté à ce type d'imprimante : soit aucune couleur, soit la couleur cyan clair, soit la couleur cyan foncé. Pour d'autres composantes chromatiques, il n'existe que les deux valeurs extrêmes de niveau de saturation chromatique. Par exemple, les imprimantes ne possèdent en général qu'une seule encre jaune. Les deux seuls niveaux de saturation existant pour cette composante chromatique seront : aucune couleur ou la couleur jaune.

La nouveauté de la présente invention réside dans le fait que les niveaux de saturation chromatique de chaque composante chromatique d'un pixel de l'image (i.e. de chaque dimension de l'espace pluridimensionnel de représentation) sont décidés après la décomposition en composantes (i.e. après la représentation en vecteurs dans l'espace pluridimensionnel). Au lieu d'avoir deux composantes chromatiques (i.e. deux dimensions de l'espace) pour une même couleur mais correspondant chacune à un niveau de saturation chromatique différent, on aura une seule composante chromatique (i.e. une seule dimension) par couleur et les niveaux de saturation chromatique seront discriminés par la suite. Cette nouveauté confère l'avantage à la présente invention de réduire le nombre de composantes (i.e. de dimensions) à traiter par rapport à des procédés dans lesquels les niveaux de saturation chromatique sont pris en compte dès le début du procédé (lors de la décomposition ou de la représentation en vecteurs). L'exemple plus général de représentation des pixels en vecteurs dans un espace pluridimensionnel sera pris pour illustrer le procédé selon l'invention. Dans le cas le plus simple, chaque composante chromatique correspondant à une dimension de l'espace pluridimensionnel correspond exactement à une couleur directement imprimable ou affichable par les dispositifs auxquels la trame est destinée. Dans le cas plus complexe où au moins certaines dimensions de l'espace de représentation ne correspondent pas exactement à des couleurs directement imprimables ou affichables par les dispositifs auxquels la trame est destinée, le procédé pourra comporter une étape supplémentaire de conversion des coordonnées des vecteurs en composantes chromatiques directement utilisables par les dispositifs auxquels la trame est destinée.

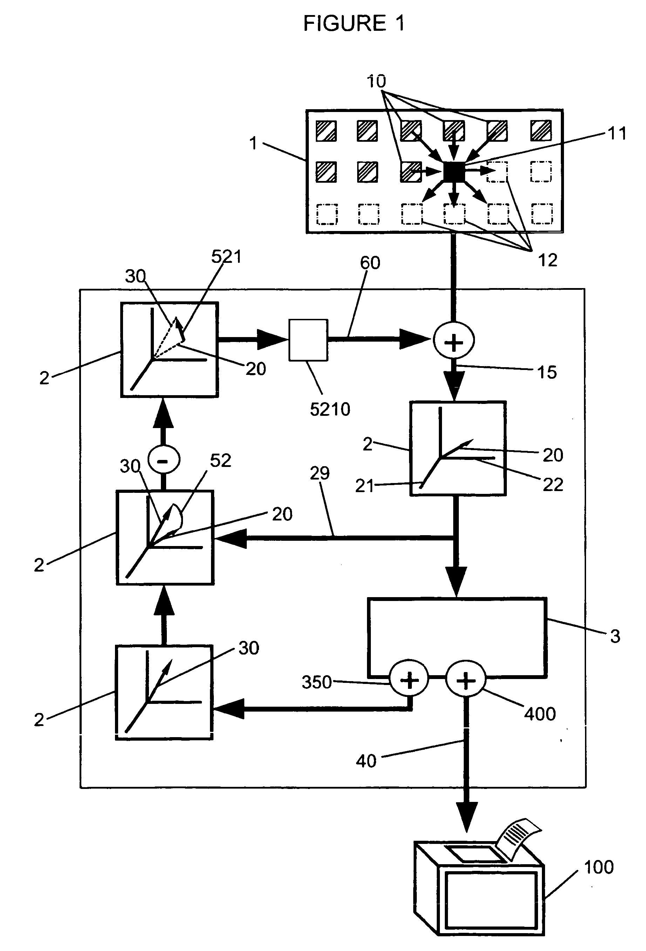

La figure 1 représente le procédé selon l'invention, qui consiste en la répétition des différentes étapes pour chaque pixel de la trame (1) constituant une image. Les pixels déjà traités et mémorisés sont représentés en hachuré, les pixels mémorisés non traités sont représentés en pointillés et le pixel en cours de traitement est représenté en noir. Les flèches entre pixels de la trame symbolisent la diffusion d'erreur vectorielle. Les pixels successifs d'une image en cours de tramage subissent un changement d'espace des couleurs, c'est-à-dire une opération (15) de représentation de chaque pixel en vecteurs (20) dans un espace (2) pluridimensionnel, dont au moins certaines dimensions (21, 22) correspondent à des composantes chromatiques (et/ou de luminance) mais ne possédant qu'une seule dimension par composante chromatique, quelle que soit le niveau de saturation chromatique. Pendant cette opération (15) de représentation du pixel (11) en cours de traitement, les erreurs vectorielles (52), introduites par les traitements des pixels (10) précédents et voisins dans la trame et mémorisées dans une mémoire (5210) d'erreur, sont ajoutées aux coordonnées du vecteur (20) représentatif du pixel (11). Les coordonnées des vecteurs (20) ainsi obtenus sont mémorisées (29) dans une mémoire. Les coordonnées des vecteurs (20) représentatifs des pixels successifs de la trame (1) subissent ensuite, dans chacune des dimensions (21, 22) de l'espace, une opération (3) de décision du niveau de saturation chromatique auquel elles correspondent. Cette opération (3) de décision permet d'obtenir des nouvelles coordonnées (30) de ce vecteur. L'erreur vectorielle (52) introduite par ce traitement est ensuite calculée grâce à un vecteur d'erreur (521) dont les coordonnées sont égales à la différence entre les coordonnées initiales (20), stockées (29) en mémoire, du vecteur représentatif du pixel (11) en cours de traitement et les nouvelles coordonnées (30) de ce vecteur après décision (3) des niveaux de saturation des différentes composantes chromatiques. La diffusion (60) de l'erreur vectorielle (52) consiste à ajouter les coordonnées de ce vecteur d'erreur (521) aux coordonnées des vecteurs représentatifs des pixels (12) suivants et voisins dans la trame.

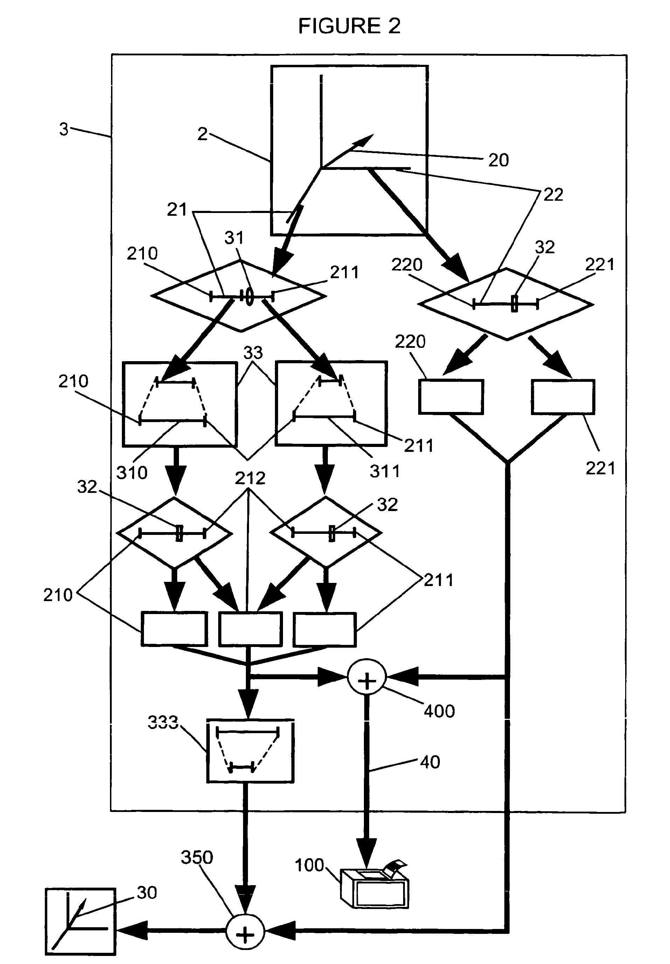

L'opération (3) de décision des niveaux de saturation des différentes composantes chromatiques, représentée sur la figure 2, dépend du nombre de niveaux de saturation chromatique disponibles, pour chaque composante chromatique, dans les dispositifs (100) auxquels la trame est destinée. Dans les dimensions (22) concernant des composantes chromatiques pour lesquelles il n'existe que les deux valeurs (220, 221) extrêmes de niveaux de saturation chromatique dans les dispositifs auxquels la trame est destinée, un seul seuil réglable à une valeur (32) de saturation chromatique est appliqué aux coordonnées des vecteurs (20) représentatifs des pixels successifs dans chacune de ces dimensions. Ces coordonnées sont comparées à la valeur mémorisée (32) de ce seuil réglable de saturation chromatique permettant de leur attribuer une valeur définissant l'absence (220) ou la présence (221), dans le pixel, de la composante chromatique représentée par cette dimension (22) de l'espace (2). Dans les dimensions (21) concernant des composantes chromatiques pour lesquelles il existe au moins un autre niveau (212) de saturation chromatique que les deux valeurs extrêmes (210, 211) dans les dispositifs auxquels la trame est destinée, les coordonnées des vecteurs représentatifs des pixels successifs, subissent une opération (3) de décision des niveaux de saturation chromatique en plusieurs étapes, représentées sur la figure 2. Au cours de cette opération (3) de décision, les circuits de traitement de l'appareil exécutent une première étape qui consiste à comparer les coordonnées du vecteur représentatif du pixel en cours de traitement, dans ces dimensions, avec une valeur (31) d'un seuil réglable de zones de saturation chromatique. Ce seuil réglable (31) permet de définir la limite, dans l'échelle (21) complète des niveaux de saturation chromatique possibles, entre deux zones (310, 311) de degré de saturation chromatique différentes (par exemple, des degrés clair et foncé). En fonction de la valeur des coordonnées du vecteur (20) dans cette dimension (21) par rapport à ce seuil (31), une de ces deux zones (310, 311) de degré est choisie comme étant celle dans laquelle le pixel est représenté. Par exemple, l'échelle (21) complète des niveaux de saturation chromatique possibles peut être codée sur 8 bits et le choix de la zone claire ou de la zone foncée aboutit à un résultat codé sur 1 bit. Une deuxième étape (33), exécutée par l'appareil, consiste en une mise à l'échelle des coordonnées du vecteur dans cette dimension (21) et de la zone (310 ou 311) de degré de saturation chromatique choisie (310 ou 311), pour les mettre à la taille de l'échelle (21) complète (par exemple 0 à 255) des niveaux de saturation chromatique possibles. Les coordonnées du vecteur dans cette dimension (21) seront alors comprises, par exemple, dans une échelle codées sur 8 bits et ne représentant que les niveaux de saturation de la zone de degré choisi (clair ou foncé). La valeur, dans cette dimension, des coordonnées du vecteur mises à l'échelle, dans la zone de degré de saturation chromatique choisie (310 ou 311) et mise à l'échelle, sont ensuite comparées à une valeur (32) de seuil réglable de saturation chromatique définissant la limite entre deux niveaux de saturation chromatique différents (210 et 212, ou 212 et 211). Cette opération de comparaison permet l'attribution aux coordonnées du vecteur, dans cette dimension (21), du niveau de saturation chromatique (210, 211, 212) dont elles sont les plus proches, définissant enfin le niveau de saturation du pixel pour cette composante chromatique. Par exemple, la valeur, dans cette dimension, des coordonnées du vecteur mises à l'échelle, dans la zone de degré de saturation chromatique choisie et mise à l'échelle peut être codée sur 8 bits. Cette comparaison au seuil aboutit, par exemple, à un résultat codé sur 1 bit, représentant soit le niveau de saturation chromatique minimum de la zone de degré de saturation chromatique choisie, soit son niveau maximum.

Les étapes de cette opération (3) de décision des niveaux de saturation sont réitérées pour chaque composante chromatique. Le niveau de saturation choisi (210, 211, 212) et mémorisé pour chaque composante chromatique est ensuite combiné (400) avec les niveaux choisis (220, 221) pour les autres composantes. Cette combinaison (400) équivaut à la décision des niveaux de saturation chromatique pour chaque dimension de l'espace (2) pluridimensionnel de représentation des pixels en vecteurs. Les vecteurs ainsi obtenus correspondent alors à des vecteurs de référence, puisqu'ils représentent chacun une combinaison chromatique utilisable par les dispositifs (100) auxquels la trame est destinée, soit directement si les dimensions de l'espace de représentation correspondent exactement aux composantes chromatiques utilisables, soit après conversion dans le cas contraire. Cette nouvelle combinaison de coordonnées de vecteur (i.e. cette nouvelle combinaison de niveaux de saturation chromatique) est ensuite transmise (40) au dispositif (100) auquel la trame est destinée. Par exemple, cette nouvelle combinaison de niveaux de saturation chromatique est transmise (40) à l'imprimante (100) pour qu'elle imprime un pixel contenant les couleurs définies par ces niveaux de saturation chromatique. Les nouvelles coordonnées du vecteur, dans les dimensions (21) qui ont subi une mise à l'échelle, sont ensuite remises (333) à l'échelle complète de départ (contenant tous les niveaux de saturation chromatique possibles), puis combinées (350) avec les coordonnées du vecteur dans les autres dimensions (22). Cette combinaison (350) aboutit à un nouveau vecteur (30) dont les coordonnées seront comparées avec les coordonnées initiales (20) du vecteur pour le calcul de l'erreur (52) introduite pour ce pixel par le traitement des niveaux de saturation chromatique. Par exemple, le nouveau niveau de saturation chromatique attribué sera codé de nouveau sur 8 bits dans une échelle contenant tous les niveaux de saturation chromatique possibles au lieu de l'échelle ne contenant que les niveaux de saturation de la zone de saturation chromatique choisie et également codée sur 8 bits, mais après mise à l'échelle pour obtenir une coordonnée de vecteur de référence du pixel traité.

En plus de l'opération (40) de transmission des niveaux de saturation chromatique choisis (210, 211, 212, 220, 221) au dispositif (100) auquel la trame est destinée, l'erreur vectorielle (52) introduite pour ce pixel est calculée, comme représenté sur la figure 1. Le calcul de l'erreur vectorielle (52) consiste en un calcul d'un vecteur d'erreur (521) dont les coordonnées dans l'espace (2) pluridimensionnel de représentation sont égales à la différence entre les coordonnées initiales (20), gardées (29) en mémoire, du vecteur représentatif du pixel (11) en cours de traitement et les nouvelles coordonnées (30) de ce vecteur après l'opération (3) de décision des niveaux de saturation des différentes composantes chromatiques (21, 22). La diffusion (60) de l'erreur vectorielle (52) consiste à ajouter les coordonnées de ce vecteur d'erreur (521), mémorisé dans une mémoire (5210) d'erreur, aux coordonnées (20) des vecteurs représentatifs des pixels (12) suivants et voisins dans la trame.

Dans une variante de réalisation, les dispositifs, auxquels la trame est destinée, possèdent plus d'un niveau de saturation chromatique intermédiaire entre les valeurs extrêmes. La première étape de la décision des niveaux de saturation chromatique consistera en la comparaison avec plusieurs seuils réglables de zones de saturation définissant plusieurs zones de saturation. La mise à l'échelle de la zone de saturation chromatique choisie sera plus importante que dans le cas d'un seul seuil, mais la comparaison avec le seuil de saturation chromatique sera identique. La décision aboutira, de la même façon, à un niveau de saturation qui devra être remis à l'échelle de départ pour le calcul de l'erreur vectorielle.

On comprend que l'on a ainsi réalisé un procédé d'établissement de trame par décision des niveaux de saturation chromatique et diffusion d'erreur qui permet d'utiliser des circuits de traitements nécessitant des capacités de calcul moindres et des circuits de mémorisation de capacité moins élevée que dans l'art antérieur, du fait que les niveaux de saturation des couleurs sont gérés après le changement de l'espace des couleurs, ce qui évite l'augmentation du nombre de composantes de couleur à traiter. Ainsi, pour chaque pixel (11) traité, il suffit, d'une part, de mémoriser, dans une mémoire (5210) d'erreur, les erreurs vectorielles (52) introduites sur au maximum seulement les 4 pixels (10) précédents et voisins dans la trame (1) du pixel (11) traité et, d'autre part, de diffuser l'erreur vectorielle (52), introduite pour le pixel (11) traité du fait de l'opération (3) de décision des niveaux de saturation chromatique, sur au maximum seulement les 4 pixels (12) suivants et voisins dans la trame (1) du pixel (11) traité. Pour le traitement des pixels successifs de la trame, une solution pratique consiste à garder en registre les signaux représentatifs du pixel précédant directement le pixel en cours de traitement. Une capacité de mémoire de travail permettant de stocker les signaux représentatifs des pixels d'une ligne complète de trame sera alors amplement suffisante pour mémoriser les valeurs transitoires nécessaires à l'application du procédé. L'appareil doit pouvoir mémoriser les données de l'image initiale et disposer de circuits de traitement suffisamment rapides par rapport à la vitesse d'absorption des informations par l'imprimante pour élaborer au vol les données relatives aux pixels à imprimer successivement ou bien d'une capacité de mémorisation suffisante pour mémoriser les données relatives à tous les pixels de l'image à imprimer.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

Il est bien évident que les moyens mentionnés ci-dessus peuvent se trouver soit dans l'appareil qui génère les informations représentatives de l'image, soit dans l'appareil qui imprime les pixels grâce aux informations représentatives de l'image.

## Revendications

1. Procédé d'établissement de signaux de trame (1) par décision (3) de niveau de saturation chromatique et diffusion (60) d'erreur comportant une étape de représentation (15) des signaux représentatifs des pixels en vecteurs dans un espace (2) pluridimensionnel dont au moins certaines dimensions correspondent à des composantes chromatiques et/ou de luminance, et comportant une seule dimension pour représenter une même couleur à des niveaux de saturation chromatique différents et le procédé comportant également une étape de décision (3) des niveaux de saturation chromatique correspondant aux coordonnées des vecteurs dans les différentes dimensions (21, 22) représentatives des différentes composantes chromatiques des pixels successifs, l'étape de représentation dans un espace (2) pluridimensionnel étant distincte de l'étape de décision (3) des niveaux de saturation chromatique.

2. Procédé d'établissement de trame (1) selon la revendication 1, **caractérisé en ce que** l'étape de décision (3) des niveaux de saturation chromatique correspondant aux coordonnées des vecteurs représentatifs des pixels successifs, dans chacune des dimensions (21) concernant des composantes chromatiques pour lesquelles il existe un signal représentatif d'un niveau (212) de saturation chromatique intermédiaire entre les signaux représentatifs des deux valeurs extrêmes (210, 211) de représentation de saturation chromatique dans les dispositifs (100) auxquels la trame est destinée, consiste en les étapes suivantes :
- comparaison, dans cette dimension (21), des signaux représentatifs des coordonnées du vecteur (20) représentatif du pixel (11) en cours de traitement avec une valeur de seuil réglable (31) de zones de degré de saturation chromatique définissant la limite, dans l'échelle (21) complète des signaux représentatifs des niveaux de saturation chromatique possibles, entre deux zones (310, 311) de degré de saturation chromatique différentes (claire et foncée), puis choix de la zone dans laquelle les coordonnées du vecteur, dans cette dimension, sont comprises ;
- mise à l'échelle (33) des signaux représentatifs des coordonnées du vecteur dans cette dimension (21) et des signaux représentatifs de la zone de degré de saturation chromatique choisie (310, 311) à la taille de l'échelle (21) complète des signaux représentatifs des niveaux de saturation chromatique possibles, comparaison des signaux représentatifs des coordonnées du vecteur, dans la zone (310, 311) de saturation chromatique choisie, avec une valeur de seuil réglable (32) de saturation définissant la limite entre deux signaux représentatifs de niveaux de saturation chromatique différents (210-212, 212-211), attribution aux coordonnées du vecteur dans cette dimension (21) du signal représentatif du niveau de saturation chromatique dont ces coordonnées du vecteur sont les plus proches, puis combinaison (400) du signal attribué pour cette dimension (21) avec les signaux représentatifs des coordonnées du vecteur dans les autres dimensions et transmission (40) de ces signaux combinés vers les dispositifs (100) auxquels la trame est destinée ;
- retour (333) du signal attribué pour cette dimension (21) à l'échelle de départ et combinaison (350) avec les signaux représentatifs des coordonnées du vecteur dans les autres dimensions, puis représentation des nouvelles coordonnées (30) du vecteur dans l'espace (2) pluridimensionnel, en vue de leur comparaison avec les coordonnées initiales (20).

3. Procédé d'établissement de trame (1) selon l'une quelconque des revendications 1 et 2, **caractérisé en ce que** l'étape de décision (3) des niveaux de saturation chromatique correspondant aux coordonnées des vecteurs représentatifs des pixels successifs, dans chacune des dimensions (22) concernant des composantes chromatiques pour lesquelles il n'existe que les signaux représentatifs des deux valeurs extrêmes (220, 221) de niveaux de saturation chromatique dans les dispositifs (100) auxquels la trame est destinée, consiste en les étapes suivantes :
- comparaison des signaux représentatifs des coordonnées des vecteurs (20) dans cette dimension avec une valeur de seuil réglable (32) de saturation chromatique et attribution d'un des deux signaux représentatifs des valeurs extrêmes (220, 221) de niveaux de saturation chromatique dans cette dimension de l'espace (2) ;
- combinaison (400) du signal attribué pour cette dimension avec les signaux représentatifs des coordonnées des vecteurs dans les autres dimensions, puis transmission (40) de ces signaux combinés vers les dispositifs (100) auxquels la trame est destinée ;
- combinaison (350) du signal attribué pour cette dimension avec les signaux attribués aux coordonnées des vecteurs dans les autres dimensions et remis à l'échelle pour la représentation des nouvelles coordonnées (30) des vecteurs dans l'espace (2) pluridimensionnel, en vue de leur comparaison avec les coordonnées initiales (20).

4. Procédé d'établissement de trame (1) selon l'une quelconque des revendications 1 à 3, **caractérisé en ce qu'**il consiste en la répétition des étapes suivantes pour chaque pixel de la trame :
- représentation (15) du pixel (11) dans ledit espace (2) pluridimensionnel sous la forme de signaux représentatifs d'un vecteur (20) dont les coordonnées sont stockées (29) en mémoire après ajustement (60), en fonction des signaux représentatifs des erreurs vectorielles (52) mémorisées, éventuellement introduites sur les pixels (10) précédents et voisins dans la trame ;
- décision (3) signaux représentatifs des niveaux de saturation chromatique correspondant aux coordonnées de ce vecteur (20) dans les différentes dimensions (21, 22) représentatives des différentes composantes chromatiques, pour définir de nouvelles coordonnées vectorielles (30) ;
- calcul et mémorisation de l'erreur vectorielle (52) introduite pour ce pixel par comparaison des nouvelles coordonnées (30) du vecteur avec ses coordonnées initiales (20) stockées (29) en mémoire et diffusion (60) de l'erreur vectorielle (52) aux pixels (12) mémorisés, suivants et voisins dans la trame.

5. Procédé d'établissement de trame (1) selon l'une quelconque des revendications 1 à 4, **caractérisé en ce que** le calcul de l'erreur vectorielle (52) consiste en le calcul d'un vecteur d'erreur (521) dont les coordonnées, dans ledit espace (2) pluridimensionnel, sont égales à la différence entre les coordonnées initiales (20), gardées (29) en mémoire, du vecteur représentatif du pixel en cours de traitement et celles (30) après décision des niveaux de saturation chromatique dans les différentes dimensions (21, 22) de l'espace (2) pluridimensionnel.

6. Procédé d'établissement de trame (1) selon l'une quelconque des revendications 1 à 5, **caractérisé en ce que** la diffusion (60) de l'erreur vectorielle (52) mémorisée consiste en l'ajout, dans ledit espace (2) pluridimensionnel, des signaux représentatifs des coordonnées d'un vecteur d'erreur (521), calculé et mémorisé pour un pixel (11), aux signaux représentatifs des coordonnées des vecteurs représentatifs des pixels (12) mémorisés, suivants et voisins dans la trame.

7. Procédé d'établissement de trame (1) selon l'une quelconque des revendications 1 à 6, **caractérisé en ce que** les composantes chromatiques de représentation correspondant aux dimensions (21, 22) de l'espace pluridimensionnel de représentation sont directement utilisables par les dispositifs (100) auxquels ia trame (1) est destinée et que la transmission (40) des signaux représentatifs des coordonnées (30) de vecteur vers ces dispositifs (100) consiste simplement en l'envoi des signaux représentatifs des niveaux de saturation chromatique choisis, pour chaque dimension (21, 22) de l'espace (2) de représentation.

8. Procédé d'établissement de trame (1) selon l'une quelconque des revendications 1 à 6, **caractérisé en ce que**, lorsque les composantes chromatiques et/ou de luminance correspondant aux dimensions (21, 22) de l'espace (2) pluridimensionnel de représentation ne sont pas directement utilisables par les dispositifs (100) auxquels la trame est destinée, la transmission (40) des signaux représentatifs des coordonnées (30) de vecteur vers ces dispositifs comporte une étape préalable de conversion des signaux représentatifs des niveaux de saturation chromatique choisis, pour chaque dimension (21, 22) des coordonnées (30) des vecteurs représentatifs des pixels, en signaux représentatifs de niveaux de saturation des composantes chromatiques directement utilisables par les dispositifs auxquels la trame est destinée.

9. Procédé d'établissement de trame (1) selon l'une quelconque des revendications 1 à 8, **caractérisé en ce que** l'étape de décision (3) des niveaux de saturation chromatique correspondant aux coordonnées des vecteurs représentatifs des pixels successifs, dans chacune des dimensions (21) concernant des composantes chromatiques pour lesquelles il existe n signaux représentatifs de niveaux (212) de saturation chromatique intermédiaires entre les signaux représentatifs des deux valeurs extrêmes (210, 211) de niveaux de saturation chromatique dans les dispositifs (100) auxquels la trame est destinée, consiste en les étapes suivantes :
- comparaison, dans cette dimension (21), des signaux représentatifs des coordonnées du vecteur (20) représentatif du pixel (11) en cours de traitement avec n valeurs de seuils réglables (31) de zones de degré de saturation chromatique définissant les limites, dans l'échelle (21) complète des signaux représentatifs des niveaux de saturation chromatique possibles, entre n+1 zones (310, 311) de degré de saturation chromatique différentes (claire et foncée), puis choix de la zone dans laquelle les coordonnées du vecteur, dans cette dimension, sont comprises ;
- mise à l'échelle (33) des signaux représentatifs des coordonnées du vecteur dans cette dimension (21) et des signaux représentatifs de la zone de degré de saturation chromatique choisie (310, 311) à ia taille de l'échelle (21) complète des signaux représentatifs des niveaux de saturation chromatique possibles, comparaison des signaux représentatifs des coordonnées du vecteur, dans la zone (310, 311) de saturation chromatique choisie, avec une valeur de seuil réglable (32) de saturation définissant la limite entre deux signaux représentatifs de niveaux de saturation chromatique différents (210-212, 212-211), attribution aux coordonnées du vecteur dans cette dimension (21) du signal représentatif du niveau de saturation chromatique dont ces coordonnées du vecteur sont les plus proches, puis combinaison (400) du signal attribué pour cette dimension (21) avec les signaux représentatifs des coordonnées du vecteur dans les autres dimensions et transmission (40) de ces signaux combinés vers les dispositifs (100) auxquels la trame est destinée ;
- retour (333) du signal attribué pour cette dimension (21) à l'échelle de départ et combinaison (350) avec les signaux représentatifs des coordonnées du vecteur dans les autres dimensions, puis représentation des nouvelles coordonnées (30) du vecteur dans l'espace (2) pluridimensionnel, en vue de leur comparaison avec les coordonnées initiales (20).

10. Dispositif d'établissement de trame d'image comprenant des moyens de traitement pour la représentation de signaux représentatifs de pixels d'une image en vecteurs dans un espace (2) pluridimensionnel dont au moins certaines dimensions correspondent à des composantes chromatiques et/ou de luminance, et comportant des moyens de traitement de chaque vecteur représentatif d'un pixel d'une image pour décider des niveaux de saturation chromatique à attribuer aux coordonnées de ce vecteur pour chaque dimension représentative des différentes composantes chromatiques ayant des niveaux de saturation chromatique de représentation autres que les niveaux extrêmes d'une composante chromatique.

11. Dispositif d'établissement de trame d'image selon la revendication 10, **caractérisé en ce qu'**il comprend des moyens de calcul des erreurs vectorielles introduites par le traitement de décision des niveaux de saturation chromatique, des moyens de mémorisation des erreurs et des moyens de diffusion des erreurs vectorielles sur les pixels à traiter, suivants et voisins dans la mémorisation matricielle de l'image.

12. Dispositif d'établissement de trame d'image selon une des revendications 10 et 11, **caractérisé en ce qu'**il comprend des moyens de transmission des signaux représentatifs des niveaux de saturation attribués à chaque pixel de la trame vers les dispositifs auxquels la trame est destinée, sous forme de signaux directement utilisables par ces dispositifs.

## Claims

1. Method for establishing frame signals (1) by deciding (3) the chromatic saturation level and error diffusion (60) including a step of representation (15) of the signals representing pixels in vectors in a multidimensional space (2), at least some the dimensions of which correspond to chromatic and/or luminance components, and including a single dimension to represent any one colour at different chromatic saturation levels and the method also including a step of deciding (3) the chromatic saturation levels corresponding to the coordinates of the vectors in the various dimensions (21, 22) representing the various chromatic components of the successive pixels, the step of representation in a multidimensional space (2) being distinct from the step of deciding (3) the chromatic saturation levels.

2. Method for establishing a frame (1) according to Claim 1, **characterised in that** the step of deciding (3) the chromatic saturation levels corresponding to the coordinates of the vectors representing the successive pixels, in each of the dimensions (21) concerning chromatic components for which there is a signal representing an intermediate chromatic saturation level (212) between the signals representing the two extreme values (210, 211) of representation of chromatic saturation in the devices (100) for which the frame is intended, consists of the following steps:
- comparison, in this dimension (21), of the signals representing the coordinates of the vector (20) representing the pixel (11) currently being processed with an adjustable threshold value (31) of zones of degree of chromatic saturation defining the limit, in the complete scale (21) of the signals representing the possible chromatic saturation levels, between two different zones (310, 311) of degree of chromatic saturation (light and dark), then selection of the zone in which the coordinates of the vector, in this dimension, are comprised;
- scaling (33) of the signals representing the coordinates of the vector in this dimension (21) and of the signals representing the selected zone of degree of chromatic saturation (310, 311) to the full-scale size (21) of the signals representing the possible chromatic saturation levels, comparison of the signals representing the coordinates of the vector, in the selected chromatic saturation zone (310, 311), with an adjustable threshold saturation value (32) defining the limit between two signals representing different chromatic saturation levels (210-212, 212-211), allocation to the coordinates of the vector in this dimension (21) of the signal representing the chromatic saturation level to which these coordinates of the vector are closest, then combination (400) of the signal allocated for this dimension (21) with the signals representing the coordinates of the vector in the other dimensions and transmission (40) of these combined signals to the devices (100) for which the frame is intended;
- return (333) of the signal allocated for this dimension (21) at the starting scale and combination (350) with the signals representing the coordinates of the vector in the other dimensions, then representation of the new coordinates (30) of the vector in the multidimensional space (2), with a view to comparing them with the initial coordinates (20).

3. Method for establishing a frame (1) according to any one of Claims 1 and 2, **characterised in that** the step of deciding (3) the chromatic saturation levels corresponding to the coordinates of the vectors representing the successive pixels, in each of the dimensions (22) concerning chromatic components for which there are only the signals representing the two extreme values (220, 221) of chromatic saturation levels in the devices (100) for which the frame is intended, consists of the following steps:
- comparison of the signals representing the coordinates of the vectors (20) in this dimension with an adjustable threshold value (32) of chromatic saturation and allocation of one of the two signals representing the extreme values (220, 221) of chromatic saturation levels in this dimension of space (2);
- combination (400) of the signal allocated for this dimension with the signals representing the coordinates of the vectors in the other dimensions, then transmission (40) of these combined signals to the devices (100) for which the frame is intended;
- combination (350) of the signal allocated for this dimension with the signals allocated to the coordinates of the vectors in the other dimensions and scaled back for the representation of the new coordinates (30) of the vectors in the multidimensional space (2), with a view to comparing them with the initial coordinates (20).

4. Method for establishing a frame (1) according to any one of Claims 1 to 3, **characterised in that** it consists in repeating the following steps for each pixel of the frame:
- representation (15) of the pixel (11) in said multidimensional space (2) in the form of signals representing a vector (20), the coordinates of which are stored (29) in memory after adjustment (60), as a function of the signals representing stored vector errors (52), introduced, if appropriate, on the preceding and adjacent pixels (10) in the frame;
- signal decision (3) representing the chromatic saturation levels corresponding to the coordinates of this vector (20) in the various dimensions (21, 22) representing the various chromatic components, in order to define new vector coordinates (30);
- calculation and storage of the vector error (52) introduced for this pixel by comparison of the new coordinates (30) of the vector with its initial coordinates (20) stored (29) in memory and diffusion (60) of the vector error (52) to the stored subsequent and adjacent pixels (12) in the frame.

5. Method for establishing a frame (1) according to any one of Claims 1 to 4, **characterised in that** the calculation of the vector error (52) consists of calculating an error vector (521), the coordinates of which, in said multidimensional space (2), are equal to the difference between the initial coordinates (20), stored (29) in memory, of the vector representing the pixel currently being processed and those (30) after deciding the chromatic saturation levels in the various dimensions (21, 22) of the multidimensional space (2).

6. Method for establishing a frame (1) according to any one of Claims 1 to 5, **characterised in that** the diffusion (60) of the stored vector error (52) consists of the addition, in said multidimensional space (2), of the signals representing the coordinates of an error vector (521), calculated and stored for a pixel (11), to the signals representing the coordinates of the vectors representing the stored subsequent and adjacent pixels (12) in the frame.

7. Method for establishing a frame (1) according to any one of Claims 1 to 6, **characterised in that** the chromatic components of representation corresponding to the dimensions (21, 22) of the multidimensional representation space can be used directly by the devices (100) for which the frame (I) is intended and that the transmission (40) of the signals representing the vector coordinates (30) to these devices (100) consists simply of sending the signals representing the selected chromatic saturation levels, for each dimension (21, 22) of the representation space (2).

8. Method for establishing a frame (1) according to any one of Claims 1 to 6, **characterised in that**, when the chromatic and/or luminance components corresponding to the dimensions (21, 22) of the multidimensional representation space (2) cannot be used directly by the devices (100) for which the frame is intended, the transmission (40) of the signals representing the vector coordinates (30) to these devices includes a preliminary step of conversion of the signals representing the selected chromatic saturation levels, for each dimension (21, 22) of the coordinates (30) of the vectors representing pixels, into signals representing saturation levels of the chromatic components that can be used directly by the devices for which the frame is intended.

9. Method for establishing a frame (1) according to any one of Claims 1 to 8, **characterised in that** the step of deciding (3) the chromatic saturation levels corresponding to the coordinates of the vectors representing the successive pixels, in each of the dimensions (21) concerning the chromatic components for which there are n signals representing intermediate chromatic saturation levels (212) between the signals representing the two extreme values (210, 211) of chromatic saturation levels in the devices (100) for which the frame is intended, consists of the following steps:
- comparison, in this dimension (21), of the signals representing the coordinates of the vector (20) representing the pixel (11) currently being processed with n adjustable threshold values (31) of zones of degree of chromatic saturation defining the full-scale limits (21) of the signals representing the possible chromatic saturation levels, between n+1 different zones (310, 311) of degree of chromatic saturation (light and dark), then selection of the zone in which the coordinates of the vector, in this dimension, are comprised;
- scaling (33) of the signals representing the coordinates of the vector in this dimension (21) and of the signals representing the selected zone of degree of chromatic saturation (310, 311) at the full-scale size (21) of the signals representing the possible chromatic saturation levels, comparison of the signals representing the coordinates of the vector, in the selected chromatic saturation zone (310, 311), with an adjustable threshold saturation value (32) defining the limit between two signals representing different chromatic saturation levels (210-212, 212-211), allocation to the coordinates of the vector in this dimension (21) of the signal representing the chromatic saturation level to which these coordinates of the vector are closest, then combination (400) of the signal allocated for this dimension (21) with the signals representing the coordinates of the vector in other dimensions and transmission (40) of these combined signals to the devices (100) for which the frame is intended;
- return (333) of the signal allocated for this dimension (21) at the starting scale and combination (350) with the signals representing the coordinates of the vector in the other dimensions, then representation of the new coordinates (30) of the vector in the multidimensional space (2), with a view to comparing them with the initial coordinates (20).

10. Device for establishing an image frame comprising processing means for the representation of signals representing pixels of an image in vectors in a multidimensional space (2), at least some of the dimensions of which correspond to chromatic and/or luminance components, and comprising means for processing each vector representing a pixel of an image in order to decide the chromatic saturation levels to be allocated to the coordinates of that vector for each dimension representing the various chromatic components having chromatic saturation levels of representation other than the extreme levels of a chromatic component.

11. Device for establishing an image frame according to Claim 10, **characterised in that** it comprises means for calculating the vector errors introduced by the decision processing of chromatic saturation levels, error storage means and means for diffusing the vector errors on the pixels to be processed that are subsequent and adjacent in the bitmap storage of the image.

12. Device for establishing an image frame according to one of Claims 10 and 11, **characterised in that** it comprises means for transmitting the signals representing the saturation levels allocated to each pixel of the frame to the devices for which the frame is intended, in the form of signals that can be used directly by these devices.

## Patentansprüche

1. Verfahren zur Erzeugung von Rasterbildsignalen (1) durch Bestimmung (3) des chromatischen Sättigungspegels und Fehlerdiffusion (60), das einen Schritt der Darstellung (15) von Signalen beinhaltet, die Pixel als Vektoren in einem mehrdimensionalen Raum (2) repräsentieren, von denen wenigstens bestimmte Dimensionen chromatischen und/oder Helligkeitskomponenten entsprechen, und das eine einzige Dimension hat, um dieselbe Farbe auf unterschiedlichen chromatischen Sättigungspegeln darzustellen, und wobei das Verfahren auch einen Schritt des Bestimmens (3) der chromatischen Sättigungspegel beinhaltet, die den Koordinaten der Vektoren in den verschiedenen Dimensionen (21, 22) entsprechen, die verschiedene chromatische Komponenten von aufeinander folgenden Pixeln repräsentieren, wobei der Schritt des Darstelles in einem mehrdimensionalen Raum (2) von dem Schritt des Bestimmens (3) der chromatischen Sättigungspegel getrennt ist.

2. Verfahren zur Erzeugung eines Rasterbildes (1) nach Anspruch 1, **dadurch gekennzeichnet, dass** der Schritt des Bestimmens (3) von chromatischen Sättigungspegeln, die den Koordinaten von Vektoren entsprechen, die aufeinander folgende Pixel repräsentieren, in jeder der Dimensionen (21) bezüglich der chromatischen Komponenten, für die ein Signal existiert, das einen chromatischen Zwischensättigungspegel (212) zwischen den Signalen repräsentiert, die die zwei äußersten Darstellungswerte (210, 211) der chromatischen Sättigung in den Vorrichtungen (100) repräsentieren, für die das Rasterbild bestimmt ist, die folgenden Schritte beinhaltet:
- Vergleichen, in dieser Dimension (21), der Signale, die Koordinaten des Vektors (20) repräsentieren, die das Pixel (11) repräsentieren, im Laufe der Bearbeitung mit einem regelbaren Schwellenwert (31) von Zonen eines Grades der chromatischen Sättigung, der die Grenze definiert, im vollen Maßstab (21) der Signale, die die möglichen chromatischen Sättigungspegel repräsentieren, zwischen zwei unterschiedlichen Zonen (310, 311) des Grades der chromatischen Sättigung (hell und dunkel), dann Auswählen der Zone, in der die Koordinaten des Vektors in dieser Dimension enthalten sind:
- Anpassen (33) der die Koordinaten des Vektors repräsentierenden Signale in dieser Dimension (21) und der Signale, die die gewählte Zone des Grades der chromatischen Sättigung (310, 311) repräsentieren, an die Größe des vollen Maßstabs (21) der Signale, die die möglichen chromatischen Sättigungspegel repräsentieren, Vergleichen der die Koordinaten des Vektors repräsentierenden Signale in der gewählten Zone (301, 311) der chromatischen Sättigung mit einem regelbaren Schwellenwert (32) der Sättigung, der die Grenze zwischen zwei Signalen definiert, die die verschiedenen chromatischen Sättigungspegel (210-212, 212-211) repräsentieren, Zuordnen des Signals, das den chromatischen Sättigungspegel repräsentiert, dessen Vektorkoordinaten am nächsten liegen, zu den Koordinaten des Vektors in dieser Dimension (21), dann Vergleichen (400) des zugeordneten Signals für diese Dimension (21) mit den Signalen, die die Koordinaten des Vektors in den anderen Dimensionen repräsentieren, und Übertragen (40) diser kombinierten Signale zu den Vorrichtungen (100), für die das Rasterbild bestimmt ist;
- Zurückbringen (333) des zugeordneten Signals für diese Dimension (21) auf den Ausgangsmaßstab und Kombinieren (350) mit den Signalen, die die Koordinaten des Vektors in den anderen Dimensionen repräsentieren, dann Darstellen der neuen Koordinaten (30) des Vektors in dem mehrdimensionalen Raum (2), um sie mit den Anfangskoordinaten (20) zu vergleichen.

3. Verfahren zur Erzeugung eines Rasterbildes (1) nach einem der Ansprüche 1 und 2, **dadurch gekennzeichnet, dass** der Schritt des Bestimmens (3) der chromatischen Sättigungspegel, die den Koordinaten der Vektoren entsprechen, die aufeinander folgende Pixel repräsentieren, in jeder der Dimensionen (22) bezüglich der chromatischen Komponenten, für die nur die Signale existieren, die die beiden äußersten Werte (220, 221) der chromatischen Sättigungspegel in den Vorrichtungen (100) repräsentieren, für die das Rasterbild bestimmt ist, die folgenden Schritte beinhaltet:
- Vergleichen der Signale, die die Koordinaten der Vektoren (20) in dieser Dimension repräsentieren, mit einem regelbaren Schwellenwert (32) der chromatischen Sättigung und Zuordnen von einem der beiden Signale, die die äußersten Werte (220, 221) der chromatischen Sättigungspegel in dieser Dimension des Raums (2) repräsentieren;
- Kombinieren (400) des zugeordneten Signals für diese Dimension mit den Signalen, die die Koordinaten der Vektoren in den anderen Dimension repräsentieren, dann Übertragen (40) dieser kombinierten Signale (100) zu den Vorrichtungen (100), für die das Rasterbild bestimmt ist;
- Vergleichen (350) des zugeordneten Signals für diese Dimension mit den Signalen, die den Koordinaten der Vektoren in den anderen Dimensionen zugeordnet wurden, und wieder Anpassen des Maßstabs zum Darstellen der neuen Koordinaten (30) der Vektoren in dem mehrdimensionalen Raum (2), um sie mit den Anfangskoordinaten (20) zu vergleichen.

4. Verfahren zur Erzeugung eines Rasterbildes (1) nach einem der Ansprüche 1 bis 3, **dadurch gekennzeichnet, dass** es die Wiederholung der folgenden Schritte für jedes Pixel des Rasterbildes beinhaltet:
- Darstellen (15) des Pixels (11) in dem genannten mehrdimensionalen Raum (2) in Form von Signalen, die einen Vektor (20) repräsentieren, dessen Koordinaten nach der Justage (60) im Speicher gespeichert (29) werden, in Abhängigkeit von den Signalen, die die gespeicherten Vektorfehler (52) repräsentieren, die möglicherweise in die Pixel (10) eingeführt wurden, die in dem Rasterbild vorangehen und benachbart sind;
- Bestimmen (3) von Signalen, die die chromatischen Sättigungspegel repräsentieren, die den Koordinaten dieses Vektors (20) in den verschiedenen Dimensionen (21, 22) entsprechen, die die verschiedenen chromatischen Bestandteile repräsentieren, um neue Vektorkoordinaten (30) zu definieren;
- Berechnen und Speichern des eingeführten Vektorfehlers (52) für diese Pixel durch Vergleichen der neuen Koordinaten (30) des Vektors mit seinen Anfangskoordinaten (20), die im Speicher gespeichert (29) sind, und Streuen (60) des Vektorfehlers (52) über die gespeicherten Pixel (12), die in dem Rasterbild folgen und benachbart sind.

5. Verfahren zur Erzeugung eines Rasterbildes (1) nach einem der Ansprüche 1 bis 4, **dadurch gekennzeichnet, dass** das Berechnen des Vektorfehlers (52) das Berechnen eines Vektorfehlers (521), dessen Koordinaten in dem genannten mehrdimensionalen Raum (2) im Laufe der Bearbeitung gleich der Differenz zwischen den im Speicher gehaltenen (20) Anfangskoordinaten (20) des Vektors sind, der das Pixel repräsentiert, und derjenigen (30) nach dem Bestimmen der chromatischen Sättigungspegel in den verschiedenen Dimensionen (21, 22) des mehrdimensionalen Raums (2) beinhaltet.

6. Verfahren zur Erzeugung eines Rasterbildes (1) nach einem der Ansprüche 1 bis 5, **dadurch gekennzeichnet, dass** das Streuen (60) des gespeicherten Vektorfehlers (52) das Addieren von Signalen in dem genannten mehrdimensionalen Raum (2), die Koordinaten eines Fehlervektors (521) repräsentieren, für ein Pixel (11) berechnet und gespeichert, zu den Signalen beinhaltet, die die Koordinaten der Vektoren repräsentieren, die die gespeicherten Pixel (2) repräsentieren, die in dem Rasterbild folgen und benachbart sind.

7. Verfahren zur Erzeugung eines Rasterbildes (1) nach einem der Ansprüche 1 bis 6, **dadurch gekennzeichnet, dass** die chromatischen Darstellungskomponenten, die den Dimensionen (21, 22) des mehrdimensionalen Darstellungsraums (21, 22) entsprechen, direkt von den Vorrichtungen (100) benutzt werden können, für die das Rasterbild (1) bestimmt ist, und dass das Übertragen (40) der Signale, die Vektorkoordinaten (30) repräsentieren, zu diesen Vorrichtungen (100) einfach das Senden der Signale, die die gewählten chromatischen Sättigungspegel repräsentieren, für jede Dimension (21, 22) des Darstellungsraums (2) beinhaltet.

8. Verfahren zur Erzeugung eines Rasterbildes (1) nach einem der Ansprüche 1 bis 6, **dadurch gekennzeichnet, dass,** wenn die chromatischen und/oder Helligkeitskomponenten, die den Dimensionen (21, 22) des mehrdimensionalen Darstellungsraums (2) entsprechen, nicht direkt von den Vorrichtungen (100) benutzt werden können, für die das Rasterbild bestimmt ist, das Übertragen (40) der Signale, die Vektorkoordinaten (40) von Signalen repräsentieren, zu diesen Vorrichtungen den vorherigen Schritt des Konvertierens der Signale, die die gewählten chromatischen Sättigungspegel repräsentieren, für jede Dimension (21, 22) der Koordinaten (30) der Vektoren, die die Pixel repräsentieren, in Signale beinhaltet, die Sättigungspegel der chromatischen Bestandteile repräsentieren, die direkt von den Vorrichtungen benutzt werden können, für die das Rasterbild bestimmt ist.

9. Verfahren zur Erzeugung eines Rasterbildes (1) nach einem der Ansprüche 1 bis 8, **dadurch gekennzeichnet, dass** der Schritt des Bestimmens (3) der chromatischen Sättigungspegel, die den Koordinaten der Vektoren entsprechen, die aufeinander folgende Pixel representieren, in jeder der Dimensionen (21) bezüglich der chromatischen Komponenten, für die n Signale vorliegen, die chromatische Zwischensättigungspegel (212) zwischen den Signalen repräsentieren, die die beiden äußersten Werte (210, 211) der chromatischen Sättigungspegel in den Vorrichtungen (100) repräsentieren, für die das Rasterbild bestimmt ist, die folgenden Schritte beinhaltet:
- Vergleichen, in dieser Dimension (21), der Signale, die die Koordinaten des Vektors (20) repräsentieren, der das Pixel (11) repräsentiert, im Laufe der Bearbeitung mit n regelbaren Schwellenwerten (31) von Zonen des Grades der chromatischen Sättigung, die die Grenzen definieren, im vollen Maßstab (21) der Signale, die die möglichen chromatischen Sättigungspegel repräsentieren, zwischen verschiedenen n+1 Zonen (310, 311) des Grades der verschiedenen chromatischen Sättigungen (hell und dunkel), dann Auswählen der Zone, in der die Koordinaten des Vektors, in dieser Dimension, enthalten sind;
- Anpassen des Maßstabs (33) der Signale, die die Koordinaten des Vektors in dieser Dimension (21) repräsentieren, und der Signale, die die gewählte Zone des Grades der chromatischen Sättigung (310, 311) repräsentieren, an die Größe des vollen Maßstabs (21) der Signale, die die möglichen chromatischen Sättigungspegel repräsentieren, Vergleichen der Signale, die die Koordinaten des Vektors repräsentieren, in der gewählten Zone (310) der chromatischen Sättigung, mit einem regelbaren Sättigungsschwellenwert (32), der die Grenze zwischen zwei Signalen definiert, die die verschiedenen chromatischen Sättigungsgepel (210-212, 212-211) repräsentieren, Zuordnen des Signals, das den chromatischen Sättigungspegel repräsentiert, dessen Vektorkoordinaten die nächsten sind, zu den Koordinaten des Vektors in dieser Dimension (21), dann Kombinieren (400) des zugeordneten Signals für diese Dimension (21) mit den Signalen, die die Koordinaten des Vektors in den anderen Dimensionen repräsentieren, und Übertragen (40) dieser kombinierten Signale zu den Vorrichtungen (100), für die das Rasterbild bestimmt ist;
- Zurückbringen (333) des zugeordneten Signals für diese Dimension (21) auf den Ausgangsmaßstab und Kombinieren (350) mit den Signalen, die die Koordinaten des Vektors in den anderen Dimensionen repräsentieren, dann Darstellen der neuen Koordinaten (30) des Vektors in dem mehrdimensionalen Raum (2), um sie mit den Anfangskoordinaten (20) zu vergleichen.

10. Vorrichtung zur Erzeugung von Bildrastern, die Folgendes umfasst: Mittel zum Bearbeiten zwecks Darstellung von Signalen, die Pixel eines Bildes repräsentieren, als Vektoren in einem mehrdimensionalen Raum (2), von dem wenigstens bestimmte Dimensionen chromatischen und/oder Helligkeitskomponenten entsprechen, und Mittel zum Bearbeiten jedes Vektors, der ein Pixel eines Bildes repräsentiert, um die chromatischen Sättigungspegel zu bestimmen, die den Koordinaten dieses Vektors für jede Dimension zuzuordnen sind, die die verschiedenen chromatischen Komponenten repräsentieren, die andere chromatische Darstellungssättigungspegel haben als die äußersten Pegel einer chromatischen Komponente.

11. Vorrichtung zur Erzeugung von Bildrastern nach Anspruch 10, **dadurch gekennzeichnet, dass** sie Mittel zum Berechnen von Vektorfehlern, die durch die Bearbeitung des Bestimmens der chromatischen Sättigungspegel eingeführt wurden, Mittel zum Speichern der Fehler und Mittel zum Streuen der Vektorfehler über die zu bearbeitenden Pixel umfasst, die in dem Matrixspeicher des Bildes folgen und benachbart sind.

12. Vorrichtung zur Erzeugung von Bildrastern nach Anspruch 10 oder 11, **dadurch gekennzeichnet, dass** sie Mittel zum Übertragen der Signale, die die Sättigungspegel repräsentieren, die jedem Pixel dieses Rasters zugeordnet sind, zu den Vorrichtungen, für die das Raster bestimmt ist, in Form von Signalen umfasst, die von den Vorrichtungen direkt benutzt werden können.
